## Europäisches Patentamt

## European Patent Office

## Office européen des brevets

(11) Veröffentlichungsnummer: **0 148 977**
**B1**

# EUROPÄISCHE PATENTSCHRIFT

(45) Veröffentlichungstag der Patentschrift:
04.11.87

(21) Anmeldenummer: 84106642.6

(22) Anmeldetag: 09.06.84

(51) Int. Cl.⁴: **F 42 B 15/26,** F 42 B 13/38

(54) **Einrichtung zur Bekämpfung von Bodenzielen aus der Luft.**

(30) Priorität: 01.07.83 DE 3323685

(43) Veröffentlichungstag der Anmeldung:
24.07.85 Patentblatt 85/30

(45) Bekanntmachung des Hinweises auf die Patenterteilung:
04.11.87 Patentblatt 87/45

(84) Benannte Vertragsstaaten:
FR GB IT

(56) Entgegenhaltungen:
FR-A-2 478 297
GB-A-1 444 029
US-A-4 050 381

(73) Patentinhaber: **DORNIER GMBH, Postfach 1420,
D-7990 Friedrichshafen 1 (DE)**

(72) Erfinder: **Idiens, Richard, Dipl.- Ing., 83, Keith
Road, Talbot Woods Bournemouth, BH3 7DT (GB)**

(74) Vertreter: **Landsmann, Ralf, Dipl.- Ing., Kleeweg 3,
D-7990 Friedrichshafen 1 (DE)**

## Beschreibung

Die Erfindung betrifft eine Einrichtung bzw. ein Verfahren zur Bekämpfung von Bodenzielen aus der Luft, wobei die Einrichtung von einem Träger in ein Zielgebiet geführt und dort ausgestossen wird und wobei die Einrichtung eine Submunitionseinheit und eine die Submunition aufnehmende, aerodynamisch wirkende Trageinheit, in Verbindung mit einem oder mehreren Zielsuchsensoren aufweist.

Zur Bekämpfung von Bodenzielen aus der Luft ist es üblich, mittels eines geeigneten Trägers z. B. eines Flugzeuges, Flugkörper oder auch einer Rakete, sogenannte Submunition, an das Zielgebiet heranzuführen und dort auszustossen.

Es ist bekannt, Submunition ungesteuert, durch Fallschirme gebremst der Erdoberfläche anzunähern. Mitgeführte, die Erdoberfläche abtastende Sensoren bewirken bei Annäherung der Submunition an ein Bodenziel auf einen für die Wirksamkeit der Submunition geeigneten Abstand deren Zündung. Infolgedessen, dass derartige Submunition, insbesondere gegen bewegte Ziele eingesetzt wird, ergeben sich für die ungesteuerte Annäherung an ein Ziel eine Reihe von Problemen, die z. B. darin bestehen, dass die Submunition erst aus einer bestimmten Abstiegshöhe in einem vorbestimmten Abstand vom Ziel gezündet bzw. abgefeuert werden kann und zudem sich bewegenden Zielen nicht zu folgen vermag. Ferner beeinträchtigen vorher nicht genau bestimmbare Windabtrifften, insbesondere im Zielgebiet, die Trefferwahrscheinlichkeit.

Die derzeit zur Verfügung stehenden Sensoren sind ohne weiteres in der Lage, Ziele am Boden bereits aus grösseren Höhen zu entdecken, jedoch kann diese vorteilhafte Eigenschaft nicht genutzt werden, da die Wirkladung der Submunition wirksam nur aus relativ geringen Flughöhen einsetzbar ist.

Eine Möglichkeit zur Lösung der genannten Probleme ist die Heranführung der Submunition an ein Zeil mittels gelenkter Trägersysteme wie Flugkörper oder Raketen, die mit einer Sucheinrichtung zum Erfassen und Halten, sowie zur Verfolgung eines Zieles ausgerüstet sind.

Dabei werden in bekannter Weise die Signale der Sucheinrichtung einem Autopiloten zur Erzeugung von Steuerkommandos für ein Steuersystem zugeführt und damit der Träger zum ausgewähltem Ziel gelenkt.

Die Trägerannäherung wählt ein Ziel mit maximal möglichem Bereich, mit möglichst geringem Steueraufwand und möglichst geringer Abweichung.

Wenn sich das zuerst ausgewählte Ziel jedoch als falsches Ziel herausstellt, steht den genannten, geführten Systemen ausreichende Zeit, ein alternatives Ziel zu suchen und anzugreifen nicht zur Verfügung.

Aufgabe der vorliegenden Erfindung ist es, die Nachteile bekannter Systeme zu beseitigen und ein selbsttätiges Heranführen von Submunition aus der Luft auch an sich bewegende Bodenziele mit einfachen Mitteln und geringem Bauaufwand zu ermöglichen.

Erfindungsgemäss ist die gestellte Aufgabe bei einer gattungsgemässen Einrichtung bzw. einem Verfahren nach den kennzeichnenden Merkmalen des Anspruches 1 bzw. des Anspruches 3 gelöst.

Die erfindungsgemässe kombinierte Sensor-Steuereinrichtung bzw. das Verfahren ermöglicht einen äusserst einfachen Aufbau und eine entsprechend einfache Wirkungsweise, woraus eine wesentliche Verbilligung und grössere Zuverlässigkeit gegenüber bekannten gelenkten Raketen mit Autopiloten resultiert.

Die erste Entdeckung eines Zieles bei grossem Abstand führt gemäss der Erfindung nicht notwendiger Weise dazu dieses zuerst entdeckte Ziel anzugreifen wenn eine Anzahl von Zielen vorhanden sind.

Der Angriff erfogt aus einem viel kürzerem Abstand vom Ziel als die heute zur Verfügung stehenden Sensoren tatsächlich fähig sind zwischen einem richtigen und falschen Ziel zu unterscheiden. Die Wahrscheinlichkeit eines Treffers ist damit gegenüber gelenkten und ungelenkten Systemen der genannten Art wesentlich verbessert.

In der Zeichnung ist ein Ausführungsbeispiel dargestellt. Nachfolgend ist die Ausführung näher beschrieben.

Es zeigt:

Figur 1 Einzelheiten des Aufbaues der Einrichtung, in einem Querschnitt,

Figur 2 in Perspektive Einzelheiten der Gleitschirm-Steuereinheit,

Figur 3 in schematischer Darstellung den allgemeinen Ablauf der Abtastung der Erdoberfläche innerhalb der Suchflugphase der Einrichtung,

Figur 4 in schematischer Darstellung den Ablauf des Arbeits- und Steuerverfahrens zur Zielannäherung mittels der Einrichtung,

Figur 5 ebenfalls schematisch dargestellt und in Verbindung mit Figur 4 den Gleitweg der Einrichtung über Grund während der Such- bzw. Zielannäherungsphase.

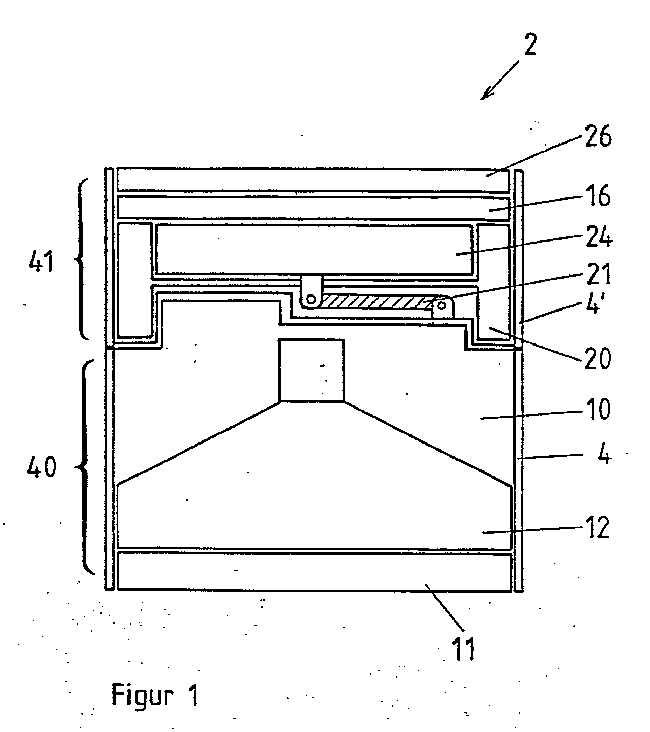

Die Einrichtung gemäss dem Ausführungsbeispiel nach Figur 1 ist aufgenommen von einem in bekannter Weise und Art in ein Zielgebiet gebrachten Flugkörpers. Der Flugkörper verfügt über eine Ausstoßvorrichtung; ebenfalls bekannter Bauart für die nachfolgend allgemein mit 2 bezeichnete Einrichtung.

In den Hauptbaugruppen weist die Einrichtung 2, wie Figur 1 im einzelnen erkennen lässt, ein Aufnahmegehäuse 4 auf, in dem sämtliche Elemente der Einrichtung vor dem Ausstoß aus der Aufnahmekammer des Flugkörpers untergebracht sind. Die Elemente sind in der Reihenfolge ihrer Anordnung im Gehäuse 4 ein oder mehrere Sensoren 11, die Wirkladung 12 für die Bekämpfung der Ziele und eine Elektronikeinheit 10 zur Zündung der die Submunition darstellenden Wirkladung 12 in Abhängigkeit von Signalen des die Bodenfläche nach Zielen absuchenden Sensors 11.

Ferner nimmt das Gehäuse 4 eine mit einer Steuereinrichung 24 verbundene, die Abtastbewegung erzeugende Einrichtung 20 auf, die über ein Antriebskabel 21 die Einheiten 40 bzw. 41 miteinander verbindet. Ausserdem ist die Steuereinheit 24 zur Steuerung des die gesamte Einrichtung während des Zielsuchvorganges tragenden, steuerbaren Gleitfallschirms 16 und ein Abbremsschirm 26 für die Verzögerung der Geschwindigkeit der Einrichtung 2 auf eine zum Öffnen des Gleitfallschirmes nach Ausstoß aus dem Träger geeignete Geschwindigkeit vorhanden.

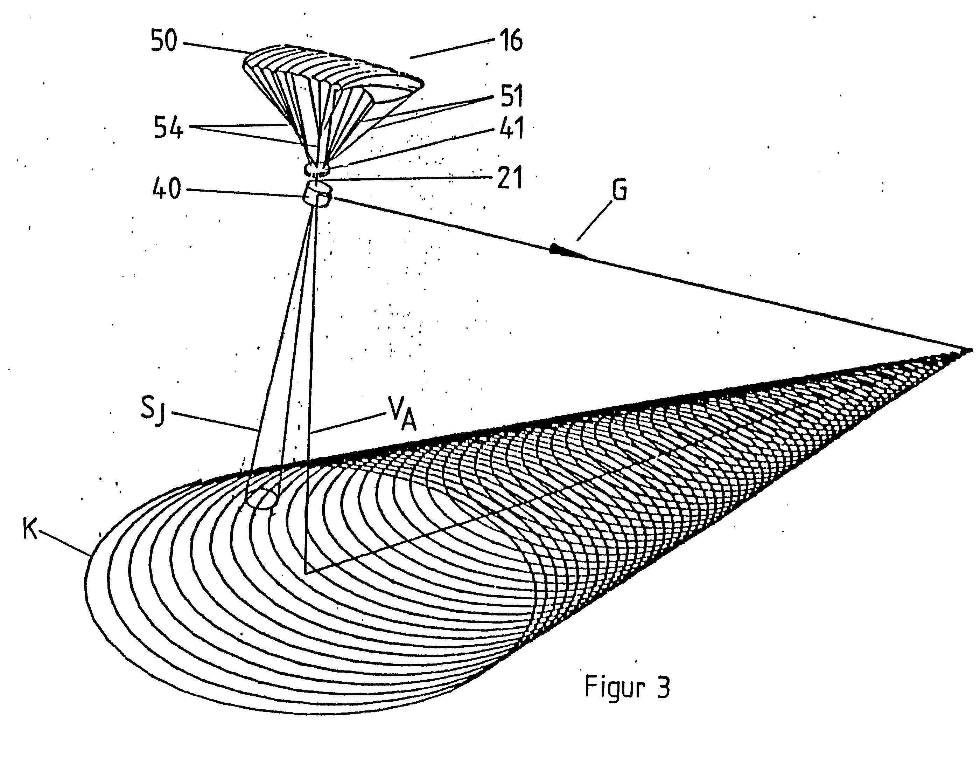

Die Elemente 4, 10, 11 bzw. 12 bilden die Submunitionseinheit 40, die von der Trägereinheit 41, bestehend aus den Elementen 16, 20, 21, 24 bzw. 26 aufgenommen wird, wobei die Submunitionseinheit 40 während der Gleitflugphase mittels der Einrichtung 20 über das Antriebskabel 21 gegenüber der Trägereinheit 41 ständig eine Rotationsbewegung um die vertikale Achse $V_A$ (Fig. 3) der Gesamteinrichtung 2 ausführt. Es sind jedoch auch andere Abtastmethoden einsetzbar, so z. B. solche mit hin- und hergehender Abtastbewegung.

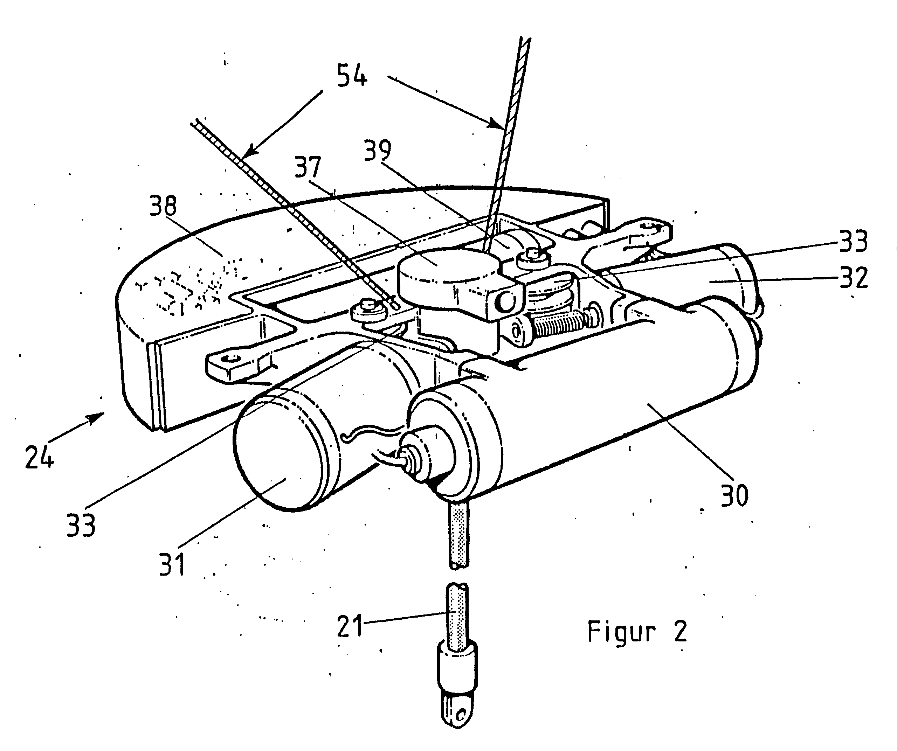

Wie in Figur 2 gezeigt, besteht die Gleitschirm-Steuereinrichtung 24 aus einem Energiespeicher 30 und zwei vom Energiespeicher 30 gespeisten Stellmotoren 31, 32, deren Antriebswellen Spulenkörper 33 zum Auf- bzw. Abwickeln von Steuerleinen 54 des Gleitschirmes 16 tragen.

Die Einheit 24 trägt ferner das Lager 37 zur drehbaren Aufhängung des Antriebkabels 21, wobei das Kabel 21 an die die Abtastbewegung erzeugende Einrichtung 20 anschliesst und während des Gleitfluges eine Drehung der die Sensoren 11 tragenden Einheit 40 um die Einrichtungslängs- bzw. Gierachse $V_A$ hervorruft.

Die Gleitschirm-Steuereinrichtung 24 enthält ferner noch Zeitschaltglieder 38 bzw. Winkelsensoren 39, mit deren Hilfe die Zeitdauer eines eingeleiteten Kurvenfluges nach vorgegebenen, eingespeicherten Werten für die Einstellung eines neuen Kurses bestimmt wird.

Der Gleitschirm 16 weist gemäss Figur 3 in üblicher Bauart die Schirmkappe 50 mit den Tragleinen 51 zur Aufnahme der Elemente der Submunitionseinheit 41 bzw. 40 auf. Ferner greifen am Gleitschirm 16 die Steuerleinen 54 an, die mittels der Gleitschirm-Steuereinrichtung 24 zur Einhaltung bzw. Änderung des Gleitpfades G betätigbar sind.

Die Submunitionseinheiten 40 werden in das Zielgebiet transportiert und dort in bekannter Weise aus dem Träger ausgestossen. Dabei arbeitet jede der Einheiten 40 zum Suchen und Bekämpfen von Bodenzielen unabhängig in der gleichen Art und Weise, jedoch ausgehend von einer sich beim Ausstoß willkürlich einstellenden Ausgangslage (Richtung des Gleitschirm-Abstiegpfades, Zeitpunkt des Öffnens des Gleitschirmes).

In Figur 3 ist die gesamte Einrichtung 2 während der Zielsuchphase im Geradeausgleitflug dargestellt, wobei die Submunitionseinheit 40 gegenüber der Trageinheit 41 eine ständige Drehbewegung (Gierbewegung um die Vertikalachse $V_A$) ausführt.

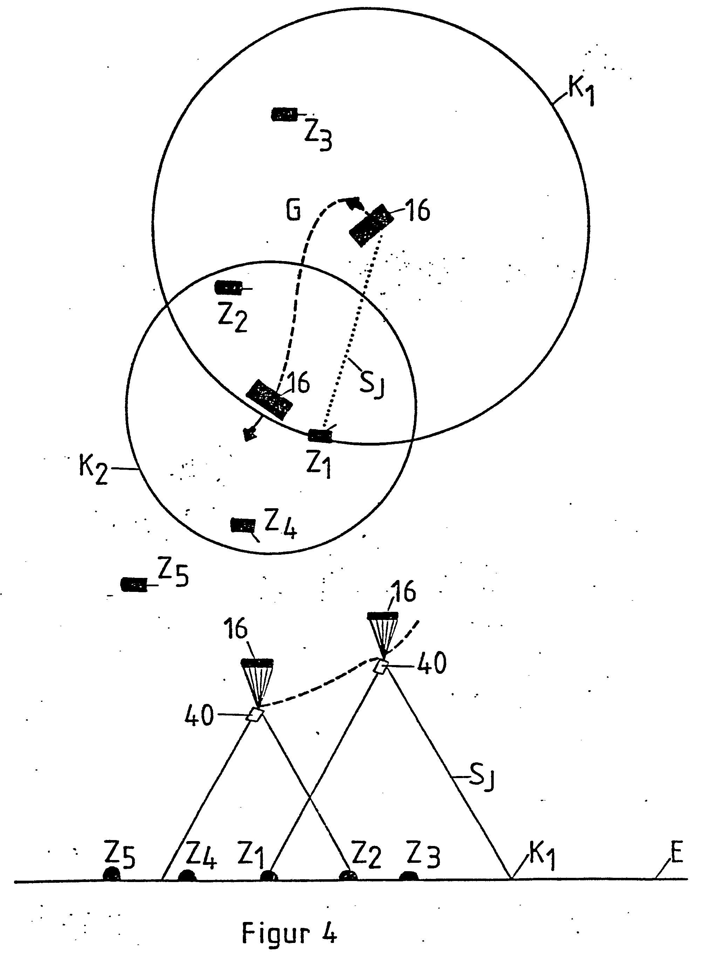

In Figur 4 sind eine Anzahl sich auf der Erdoberfläche E bewegender Ziele Z1 bis Z5 erkennbar, von denen sich die Ziele Z1, Z2 bzw. Z3 innerhalb eines vom Sensor 11 durch die Rotation um die Vertikalachse $V_A$ vom Sensorstrahl $S_J$ beschriebenen Anfangs-Abtastkreises $K_1$ befinden und zudem das Ziel Z1 vom Sensorstrahl $S_J$ erfasst ist.

Haben die Sensoren 11 der Einrichtung 2 auf dem Abtastkreis $K_1$ mit einer augenblicklichen Sichtlinie $S_J$ (Sensorstrahl) das Ziel Z1 erfasst, so wird mittels der Steuereinrichtung 24 ein Kurvenflug eingeleitet und ein neuer Kurs, abweichend bis zu 180° gegenüber dem ursprünglichen Kurs, in Richtung Ziel Z1 eingestellt.

Während des vom Kurvenflug folgenden Gleitfluges und Abtastung der Erdoberfläche E auf einem nunmehr im Durchmesser kleineren Folgeabtastkreises $K_2$, erfassen die Sensoren 11 neben dem ersten Ziel Z1 auch eventuelle weitere Ziele, z. B. Z2 oder Z4.

Es erfolgt mittels des Signals der Sensoren 11 eine Aktivierung der Steuereinheit 24 und eine erneute Umsteuerung des Gleitschirmes 16 mittels eines Kurvenfluges (bis 180° Kursänderung) auf einen neuen Kurs.

Infolge des weiteren Abstieges des Gleitschirmes 16 wird mit weiteren Steuerschritten eine zunehmende Annäherung der Einrichtung 2 an eines der vorhandenen Ziele Z1, Z2 oder Z4, und zwar sowohl in bezug auf die Flughöhe, als auch die seitliche Annäherung bewirkt. In geeignetem Abstand von einem der Ziele wird die Wirkladung 12 der Submunition gezündet und in bekannter Art und Weise gegen das nächstliegende Ziel abgeschossen.

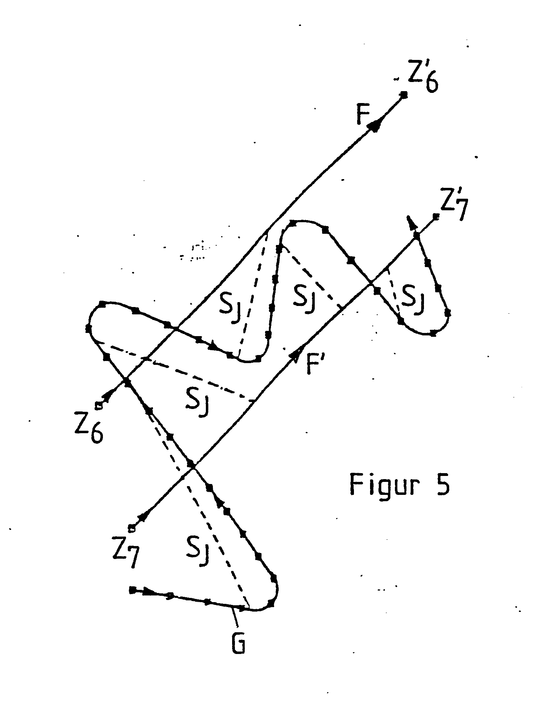

In Figur 5 ist die Annäherung der Einheit 2 nach dem Ausstoß aus einem Träger auf einem Gleitpfad G an zwei sich auf parallelen Linien F bzw. F' in gleicher Richtung fortbewegenden Zielen Z6 bzw. Z7 dargestellt und die Fähigkeit der Einrichtung erläutert, diesen Zielen zu folgen. Dabei sind die Ziele in einer Ausgangsstellung mit Z6 bzw. Z7 und in einer Folgestellung eines betrachteten Zeitraumes mit Z6' bzw. Z7' bezeichnet.

Zu Beginn der Annäherung der Einrichtung an die Ziele Z6 bzw. Z7 erfasst der Sensor 11 mit seinem Sensorstrahl $S_J$ (Sichtlinie) das Ziel Z6, wobei aus dem Ablagewinkel zwischen dem Gleitpfad F und der Sichtlinie S des Sensors 11 mittels der Elektronikeinheit 10 ein Signal zur Betätigung der Steuereinrichtung 24 gebildet wird. Mit Hilfe der Steuereinrichtung wird der Gleitschirm 16 durch einen begrenzten Kurvenflug auf einen neuen Kurs mit Richtung auf das Ziel Z6 hingesteuert (Kursänderung bis etwa 180°). Infolge des Abstiegs-Gleitpfades G der Einheit 2 nimmt der Durchmesser der Abtastkreise K (Fig. 3, 4) auf der Erdoberfläche ständig ab. Vom neuen Kurs G$_J$ aus kann eines oder beide Ziele erneut vom Sensorstrahl S$_J$ erfasst werden und es wird dann aus dem Fehlerwinkel zwischen Sensorstrahl S$_J$ (Sichtlinie) und dem Gleitpfad G (Gleitpfadrichtung) ein neuer Kurs (Kurvenflug bis 180°) mit Richtung auf die jetzt in einer veränderten Position befindlichen Ziele Z6 und bzw. oder Z7 angesteuert. Diese Manöver setzen sich fort, bis die Einrichtung 2 auf eine Höhe abgestiegen ist, aus der die Wirkladung 12 der Submunition auf das am nächsten befindliche Ziel Z7 abgeschossen werden kann.

Es zeigt sich dabei, dass die Einrichtung 2 bewegten Zielen nachfolgen und näher an die Ziele herangeführt werden kann. Hieraus ergeben sich auch Vorteile bezüglich des Einsatzes der Sensoren, so z. B. die besseren Unterscheidungsmöglichkeiten zwischen echten und falschen Zielen.

**Patentansprüche**

1. Einrichtung zur Bekämpfung von Bodenzielen aus der Luft, die von einem Träger in ein Zielgebiet geführt und dort vom Träger ausgestossen wird, enthaltend eine Submunitionseinheit und eine die Submunition aufnehmende aerodynamisch wirkende Trageinheit, in Verbindung mit einem oder mehreren ein Zielgebiet abtastenden Sensoren (Zielsuchsensoren), dadurch gekennzeichnet, dass

die Trageinheit (41) für die Aufnahme der Submunition durch eine, einen aerodynamischen Gleitflug auf einem Gleitflugabstiegspfad ermöglichende Gleitflugeinrichtung (16) gebildet ist, dass

die Gleitflugeinrichtung (16) zur Ausführung eines Kurvenfluges und oder gebremsten Fluges einstellbare Steuerflächen aufweist und dass

eine die Steuerflächen betätigende Steuereinrichtung (24) vorhanden ist, die in Abhängigkeit von durch Sensoren (11) ermittelte Ablagewinkel zwischen der Sichtlinie der Sensoren (S$_J$) zu einem festgestelltem Ziel (Z1 bis Z5) und der momentanen Flugrichtung Steuerbefehle erzeugt.

2. Einrichtung nach Anspruch 1, dadurch gekennzeichnet, dass die Gleitflugeinrichtung durch einen steuerbaren Gleitschirm (16) gebildet ist.

3. Verfahren zue Bekämpfung von Bodenzielen unter Verwendung der Einrichtung nach Ansprüchen 1 oder 2 zur selbsttätigen Annäherung bzw. zum selbsttätigen Abschuß der Submunition auf ein geortetes Ziel, dadurch gekennzeichnet, dass

a) mittels aus Fehlerwinkeln zwischen der Sensorensichtlinie (S$_J$) zu einem georteten Ziel (Z1 bis Z5) und der momentanen Gleitflugrichtung (G) ein Signal gebildet wird, dass

b) durch das Signal mittels der Gleitschirm-Steuereinrichtung (24) ein Kurvenflug eingeleitet wird, dass

c) der Kurvenflug selbsttätig bei einer neuen Flugrichtung bis zu einer Kursänderung von 180° in eine neue Geradeausflugphase übergeht, dass

d) bei erneuter Ortung des Zieles (Z1) oder eines weiteren Zieles (Z2) aus der neuen Flurichtung erneut ein Signal aus dem Fehlerwinkel gebildet und ein Kurvenflug eingeleitet wird und dass

e) in Abhängigkeit von Signalen des bzw. der Sensoren bei Erreichen einer die Bekämpfung des Zieles (Z1, Z2) ermöglichenden Annäherung die Wirkladung der Submunition (12) aktiviert wird.

4. Einrichtung nach Ansprüchen 1 oder 2, dadurch gekennzeichnet, dass die Gleitschirm-Steuereinrichtung (24) Zeitschaltglieder (38) und bzw. oder Winkelsensoren (39) für die jeweilige Beendigung der Kurvenflugphase mit Einstellung einer neuen Geradeausflugphase nach vorbestimmten, festgelegten Werten enthält.

5. Einrichtung nach den Ansprüchen 1, 2 und 4, dadurch gekennzeichnet, dass die Steuereinrichtung (24) Stellmotore (31, 32) und Spulenkörper (33) zur Betätigung von an der Gleitschirmkappe (50) angreifenden Steuerleinen (54) aufweist.

**Claims**

1. A device for attacking ground targets from the air, which device is borne by a carrier into a target area and there ejected from the carrier, the device containing a submunition unit and an aerodynamically operative carrier unit carrying the submunition in conjunction with one or several sensors (homing sensors) which scan a target area, characterised in that the carrier unit (41) for carrying the submunition comprises a gliding device (16) enabling an aerodynamic gliding flight on a gliding descent path to be achieved, in that the gliding device (16) is provided with adjustable control surfaces for effecting banking and/or braked flight, and in that a control device (24) operating the control surfaces is provided, which control device generates control commands in accordance with course angles determined by sensors (11) between the line of vision of the sensors (S$_J$) to a pre-determined target (Z1 to Z5) and the momentary direction of flight.

2. A device according to claim 1, characterised in that the gliding device comprises a controllable gliding parachute (16).

3. A method of attacking ground targets using the device according to claims 1 and 2 for the automatic approach or automatic firing of the submunition onto a located target, characerlsed in that,

a) a signal is generated from angles of deviation between the line of vision of the sensors ($S_J$) to a located target (Z1 to Z5) and the momentary direction of gliding (G), in that

b) a banking movement is initiated by the signal by means of the gliding parachute control device (24), in that

c) the banking flight for a new flight direction up to a change in course of 180° automatically passes into a new stralght flight phase, in that

d) with a new locating of the target (Z1) or of a further target (Z2) a signal is generated again from the angle of deviatlon from the new flight direction and a banking movement is initiated, and in that

e) the active charge of the submunition (12) is activated in accordance with signals of the sensor or sensors on reaching a proximity allowing the attacking of the target (Z1, Z2).

4. A device according to claims 1 or 2 characterised in that the gliding parachute control device (24) contains timing components (38) and/or angle sensors (39) for the corresponding completion of the banking phase with the setting of a new straight flight phase according to predetermined, stipulated values.

5. A device according to claims 1, 2 and 4, characterised in that the control device (24) is provided with servomotors (31, 32) and spools (33) for operating control lines (54) acting on the gliding parachute canopy (50).

**Revendications**

1. Dispositif pour attaquer des cibles au sol à partir de l'air, qui est amené par un porteur dans la région de la cible et largué dans cette région par le porteur, comprenant une unité de sous-munition et une unité porteuse se comportant de façon aérodynamique et soutenant la sous-munition, en liaison avec un ou plusieurs capteurs (sondes de recherche de cible) explorant la région de la cible, caractérisé en ce que

l'unité porteuse (41) qui supporte la sous-munition est constituée par un dispositif de vol plané (16) permettant un vol plané aérodyamique sur une trajectoire de vol plané descendante,

le dispositif de vol plané (16) comprend des surfaces de commande réglables pour exécuter un vol circulaire ou un vol freiné,

il est prévu un dispositif de commande (24) actionnant les surfaces de commande, qui émet des instructions de commande en fonction de l'angle de dérive ($S_J$) déterminé par les capteurs (11) entre la ligne de visée des capteurs sur une cible fixe (Z1 à Z5) et la direction momentanée du vol.

2. Dispositif selon la revendication 1, caractérisé en ce que le dispositif de vol plané est constitué par un parachute planeur commandable (16).

3. Procédé pour attaquer des cibles au sol en utilisant le dispositif selon les revendications 1 ou 2, en vue d'une approche automatique ou du tir automatique de la sous-munition sur une cible repérée, caractérisé en ce que:

a) un signal est formé au moyen des angles d'erreur entre la ligne de visée ($S_J$) des capteurs et une cible repérée (Z1 à Z5) et la direction momentanée du vol plané (G),

b) un vol à trajectoire circulaire est amorcé par le signal au moyen du dispositif de commande à parachute planeur (24)

c) le vol à trajectoire circulaire passe automatiquement à une nouvelle phase de vol rectiligne dans le cas d'une nouvelle direction du vol allant jusqu'à une modification de 180° de sa trajectoire,

d) lors d'une nouvelle localisation de la cible (Z1) ou d'une autre cible (Z2) à partir de la nouvelle direction du vol est formé à nouveau un signal à partir de l'angle d'erreur et est amorcé un vol à trajectoire circulaire, et

e) la charge active de la sous-munition (12) est activée en fonction des signaux provenant du ou des capteurs lorsque l'approche est suffisante pour l'attaque de la cible (Z1, Z2).

4. Dispositif selon la revendication 1 ou 2, caractérisé en ce que le dispositif de commande du parachute planeur (24) comprend des éléments de commande à minuterie (38) et/ou des capteurs d'angle (39) destinés à mettre fin à la phase de vol sur trajectoire circulaire, avec amorçage d'une nouvelle phase de vol en ligne droite en fonction de valeurs fixées et prédéterminées.

5. Dispositif selon l'une quelconque des revendications 1, 2 ou 4, caractérisé en ce que le dispositif de commande (24) comprend des servomoteurs (31, 32) et un corps de bobine (33) pour actionner des cordons de commande (54) attachés à la partie portante (50) du parachute planeur.

Figur 1

Figur 2

54

39

37

38

33

32

24

33

31

30

21

3

0 148 977

Figur 3

Figur 4

Figur 5